# EUROPEAN PATENT SPECIFICATION

(11) **EP 2 380 349 B1**
(45) Date of publication and mention of the grant of the patent: **24.01.2018**
(21) Application number: 09833677.9
(22) Date of filing: 27.11.2009
(51) Int. Cl.: G06K 9/00, G06F 17/30

(54) **METHOD FOR SPEEDING UP FACE DETECTION**
VERFAHREN ZUR BESCHLEUNIGUNG EINER GESICHTSERKENNUNG
PROCÉDÉ D'ACCÉLÉRATION DE DÉTECTION DE VISAGE

(30) Priority: 15.12.2008 NO 20085227
(43) Date of publication of application: 26.10.2011
(73) Proprietor: Cisco Systems International Sarl, 1180 Rolle (CH)
(72) Inventor: CATCHPOLE, Jason, NZ-3216 (NZ); COCKERTON, Craig, Hamilton (NZ)
(74) Representative: Kazi, Ilya
(86) International application number: PCT/NO2009/000408
(87) International publication number: WO 2010/071442

(56) References cited:
- EP-A- 1 482 736
- EP-A1- 1 798 666
- EP-A2- 1 482 736
- WO-A-2007/036838
- WO-A1-2006/130542
- WO-A1-2007/036838
- WO-A1-2008/102283
- WO-A2-2008/045153
- FR-A1- 2 852 422
- FR-A1- 2 852 422
- US-A1- 2001 042 114
- US-A1- 2001 042 114
- US-A1- 2004 109 587
- US-A1- 2007 098 303
- LONGBIN CHEN ET AL: 'Face annotation for family photo management' INTERNATIONAL JOURNAL OF IMAGE AND GRAPHICS vol. 3, no. 1, 30 December 2002, SINGAPORE, SG, ISSN 0219-4678 pages 81 - 94, XP002361519

## Description

### Field of the invention

The present invention relates to videoconferencing, particularly a face recognition method in a streaming/archiving device for video conferencing equipment.

### Background of the invention

To have a meeting among participants not located in the same area, a number of technological systems are available. These systems may include video conferencing, web conferencing or audio conferencing.

The most realistic substitute of real meetings is high-end video conferencing systems. Conventional video conferencing systems comprise a number of endpoints (or terminals) communicating real-time video, audio and/or data streams over WAN, LAN and/or circuit switched networks. The endpoints include one or more monitor(s), camera(s), microphone(s) and/or data capture device(s) and a codec, which encodes and decodes outgoing and incoming streams, respectively. In addition, a centralized source, known as a Multipoint Control Unit (MCU), is needed to link the multiple end-points together. The MCU performs this linking by receiving the multimedia signals (audio, video and/or data) from end-point terminals over point-to-point connections, processing the received signals, and retransmitting the processed signals to selected end-point terminals in the conference.

By using a videoconferencing system, e.g. a PowerPoint presentation or any other PC-presentation may be presented while still being able to see and hear all the other participants.

Another common way of presenting multimedia content is to stream data to computers through a web interface. The data stream may be transmitted in real-time, or a play back of an archived content through a streaming server. Conventional streaming data is adapted for storage and distribution, and therefore the multimedia content is represented in a different format than for video conferencing. Hence, to allow for streaming and archiving of a conventional video conference, a system for converting the multimedia data is needed. One example of such system is described in the following.

A streaming/archiving server, or content server (CS), is preferably provided with a network interface for connecting the server to a computer network, audio/video and presentation data interfaces for receiving conference content, a file conversion engine for converting presentation content into a standard image format for distribution, and a stream encoder for encoding the content into streaming format for distribution. The streaming/archiving server is further equipped with a streaming server for transmitting the encoded audio/video content to terminals located at nodes of the network and a web server for transmitting web pages and converted presentation content to terminals located at nodes of the network. The streaming/archiving server is also adapted to create an archive file consisting of the encoded stream data, residing at local storage media or in a server/database, to enable later on-demand distribution to requestors at remote terminals over the computer network.

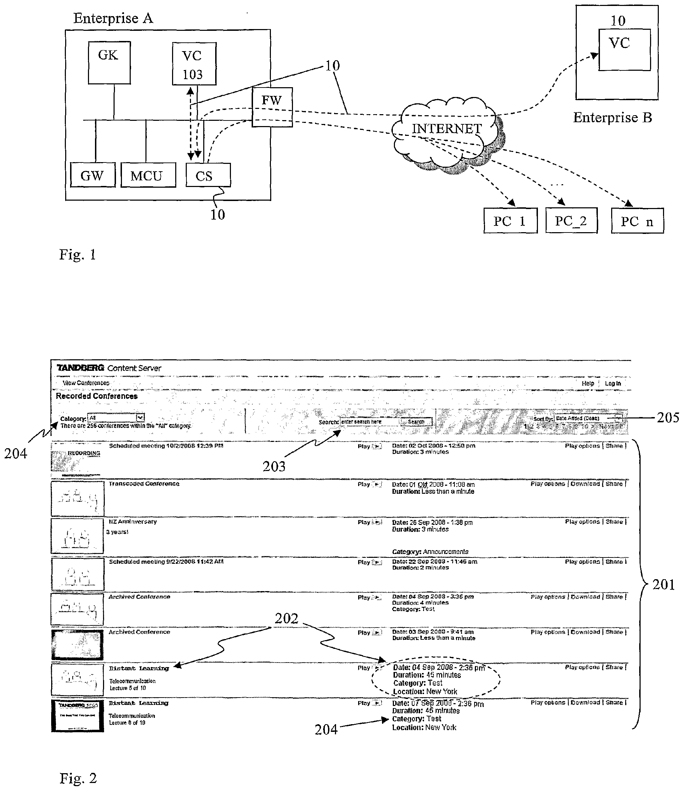

As shown in figure 1, according to a typical mode of operation, the conference is initiated by including the streaming/archiving server 101 as a participant in the conference. The streaming/archiving server accepts or places H.323 video calls 102 as point-to-point (only one H.323 system 103/104 in the call, typically used to record training materials from a single instructor) or multipoint (2-n H.323 systems in the call via an MCU in addition to the server, typically used to stream or archive meetings). A viewer at a remote terminal (PC_1 - PC_n) can access a conference by directing a conventional web browser to an URL (Uniform Resource Locator) associated with the distribution device. After completion of validation data interchanges between the viewer and the distribution device, the viewer is able to view the personal interchange, i.e. the conversation and associated behaviour, occurring between the participants at the conference presenter site, as well as view the presentation content being presented at the conference site. The multimedia content is viewed in a multiple-window user interface through the viewer web browser, with the audio/video content presented by a streaming media player, and the presentation content displayed in a separate window. When requested by the head of the conference or by the conference management system, encoded stream data is stored in a server as an identifiable file.

Users wishing to either download or stream recorded conferences, as described above, access a Graphical User Interface (GUI) for the streaming/archiving server, e.g. web based GUI. As shown in figure 2, the GUI provides a list 201 of the currently stored conferences on the streaming/archiving server. The user then has to browse and/or search through the list of stored conferences looking for the one they wish to view.

However, the amount of conferences stored on the streaming/archiving server increases dramatically over time and with increased use. With an increased amount of conferences come new challenges in assisting users to search and locate videos with content of interest. Typical solutions to this problem involve the user browsing through the content to find the item of interest. This method is only feasible for servers with small collections of conferences or when locating recently recorded conferences (as they may be sorted from newest to oldest). Alternatively, conference creators can enter metadata 202 such as a brief description of the conference, or key words that describe the conference content. This enables users to locate conferences by searching for any that contain words specified in a search engine 203. However, key word searches rely on the conference creator to manually enter the metadata information. This requires a lot of manual work, and it does not guarantee that the metadata correspond correctly to the stream data. In addition, the robustness and usefulness of the searches then depends on the verboseness and accuracy of the key words entered by the conference creator. Further, experience has showed that users rarely take the effort to change or add any metadata in their recordings/content.

Currently the most common solution to this problem is to aid the user in supplying key words. This is achieved by providing lists of broad predefined categories 204 that conference creators can choose from that best describe the content of their conference. In addition, some automatic metrics can be utilized when browsing, such as sorting by the date and time 205 the conference was created. The problem with this approach is there is very little metadata that is automatically created. Therefore, if the conference creator does not enter additional metadata the conference will essentially be orphaned in that searches will not locate it. If the content server stores a large number of conferences, browsing will be unlikely to locate the item unless the user knows the date the conference was created.

U.S. patent document US 2001 042114 discloses a multicast, multimedia conferencing system with speaker recognition and face recognition. Data related to the identities of the recognized participants are added as metadata; the participants are identified also based on their location.

### Summary of the invention

It is an object of the present invention to provide a method and a system solving at least one of the above-mention problems in prior art.

The present invention provides a system and a method making names of participants in an archived conference or presentation searchable after being stored in the archive server. According to the invention, one or more media streams coded according to H.323 or SIP are transmitted to a streaming/archiving server for converting multimedia content into a standard streaming format. A face recognition unit analyzes the video part of the multimedia content to detect faces and identify the detected faces. The face recognition unit utilizes protocol information and other video conferencing recourses to greatly reduce the search space during face recognition process, hence reducing computational cost and improving robustness of recognitions.

The features defined in the independent claims enclosed characterise this method and system. Further features are disclosed in the dependent claims.

### Brief description of the drawings

In order to make the invention more readily understandable, the discussion that follows will refer to the accompanying drawings.
Figure 1 is a block diagram illustrating a typical system architecture of audio and/or video conferencing equipment in a packet switched network,
Figure 2 is an illustration of a exemplary graphical user interface for a prior art streaming/archiving server,
Figure 3 block diagram illustrating the streaming archiving server according to the present invention,
Figure 4 is a diagram illustrating the steps performed in one embodiment of the present invention,
Figure 5 is an exemplary outtake from a user database according to one embodiment of the present invention,
Figure 6 is an illustration of a exemplary graphical user interface according to the present invention,
Figure 7 is an illustration of an exemplary use case,
Figure 8 is an illustration of face detection results, and
Figure 9 is an illustration of face tracking.

### Detailed description the invention

In the following, the present invention will be discussed by describing a preferred embodiment, and by referring to the accompanying drawings. However, people skilled in the art will realize other applications and modifications within the scope of the invention as defined in the enclosed independent claims.

As a streaming/archiving server records (or archives) video conferences, people in the video are the most common and important element. Therefore, automatically determining the identity of anyone who appears in the conference is a useful metric to be included in the metadata for a conference recording, and would provide useful avenues for user searches.

The present invention provides a novel streaming/archiving server and a novel method for making an archived multimedia stream (e.g. video conferences and/or presented data) searchable after being archived (or recorded) on the streaming/archiving server. According to the invention, one or more video conference format coded data streams (e.g. coded according to H.323 or SIP) are transmitted to a conversion engine for converting the video conference format coded data stream into a standard multimedia streaming format, which may be a cluster of files, each representing a certain medium (audio, video, data) and/or a structure file that synchronizes and associates the different media together. This cluster of files is hereafter referred to as a multimedia stream. A face recognition unit analyses the video stream (video part of said multimedia stream), detecting faces and applying face recognition algorithms to a detected face to identify the participant(s) in the recorded conference. The present invention takes advantage of the specific domain knowledge provided by the video conferencing equipment itself to reduce the number of comparisons that need to be performed by the face recognition unit. The present invention may also use other common components of communications solutions to provide further information for narrowing the search space of the face detection algorithm, and hence further increasing the robustness of the results and reducing computational cost. The face recognition unit according to the present invention is configures to associatively store the identity and an image of the detected face in a content database with the multimedia stream. After this face recognition processing, searching for participants in archived conferences could easily be executed by a conventional search engine in a graphical user interface (GUI). Further, manual browsing for an archived conference containing a particular person is also made easier since close-up images of conference participants may be displayed in the graphical user interface.

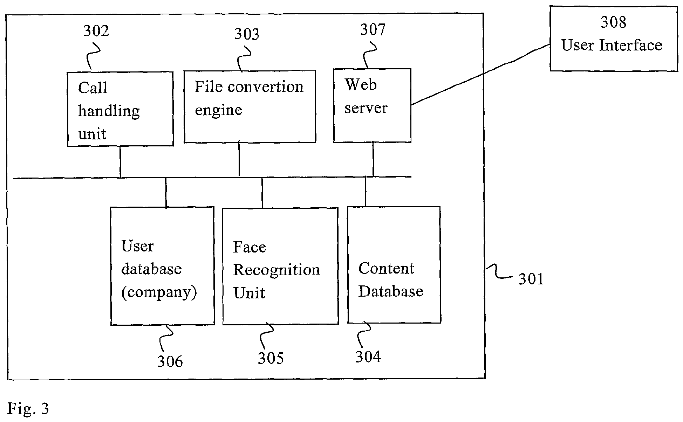

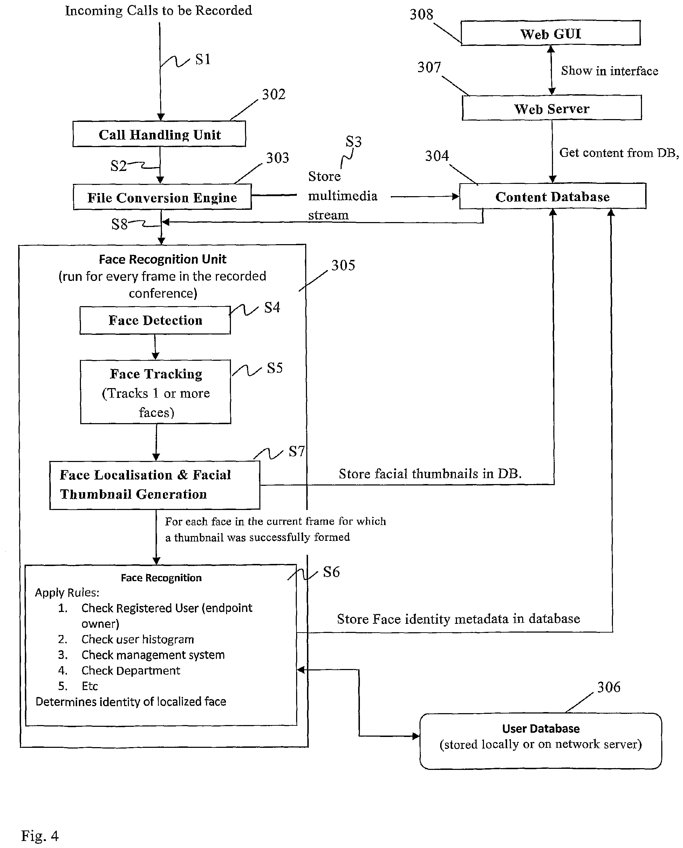

Figure 3 is a schematic view illustrating a novel streaming/archiving server 301 able to record video conferences in a multimedia streaming format, automatically identify individuals appearing in the multimedia stream and store the identities (typically the names) of the identified persons as searchable meta data, and stream a chosen multimedia stream (live or on demand) to one or more network terminals (typically a personal computer connected to the internet). Figure 4 is a flow diagram showing the interaction between the different modules of said novel streaming/archiving server 301.

According to one exemplary embodiment of the present invention the streaming/archiving server 301 comprises a call handling unit 302, a file conversion engine 303, a content database 304, a face recognition unit 305, a user database 306 and a web server 307.

In order to record a video conference on the streaming/archiving server, the archiving/streaming server 301 is including as a regular endpoint in a video conference. The streaming/archiving server acts like any other video conferencing endpoint (also referred to as video conferencing terminal) in that it can initiate and receive communication sessions (also referred to as conference calls) S 1; the only difference is that the streaming/archiving server processes the data it receives into other useful outputs rather than displaying the output on a screen. All communication sessions are handled by the call handling unit 302, and as a video conferencing endpoint the streaming/archiving server uses specific (and standardized) protocols for setting up communication sessions and communicating with a remote endpoint, e.g. H.323 and SIP.

H.323 is an umbrella Recommendation from the ITU Telecommunication Standardization Sector (ITU-T) that defines the protocols to provide audio-visual communication sessions on any packet network. The Session Initiation Protocol (SIP) is a signaling protocol, widely used for setting up and tearing down multimedia communication sessions such as voice and video calls over the Internet.

When a communication session is established between the streaming/archiving server 301 and a video conferencing endpoint or an MCU (not shown), the incoming video conference format coded data stream (video, audio, data) are sent S2 to the file conversion engine 302. The file conversion engine converts (also referred to as transcoding) the video conference format coded data stream into at least one multimedia stream in a defined multimedia streaming format (and/or a downloadable file format), e.g. Windows Media, MPEG4 and Real Media formats.

The file conversion engine stores S3 the multimedia stream in the content database 304. The content database 304 may reside on a local storage media or on a network server/database, and enables later on-demand distribution to requestors at remote network terminals over a computer network (typically internet). The file conversion engine 303 also automatically store metadata associatively with the multimedia stream (or streams, if multiple streaming formats was generated). This automatically stored meta data typically comprise basic file data, e.g. the date the multimedia stream was stored in the database and/or the duration of the multimedia stream and/or a default preset title.

The process of converting the video conference format coded data stream into a multimedia stream in a defined multimedia streaming format and storing said multimedia stream is referred to as recording a conference.

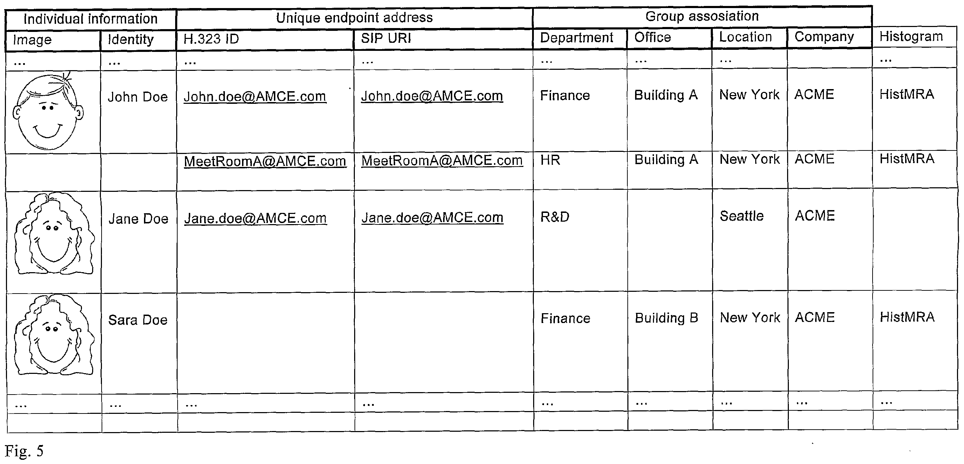

The user database 306 is a database containing the identities of set of known individuals, facial images of said set of known individual, and one or more unique addresses of video conferencing terminals, and how the individuals and terminals are related. Each identity and unique address is associated with one or more groups. For example, a user database 306 may contain records of all the employees and video conferencing terminals of a company or organization. Each record for a employee comprise a facial image of an employee, the name (identity) of that employee, one or more unique addresses (H.323 ID, SIP address, E.164 alias) of a video conferencing endpoint registered to the employee. Further, each employee's record comprises information about which groups the employees (and their endpoints) are associated with, e.g. which company or organization he/she works for, which department or office he/she works in, or other useful groupings; e.g. geographical location, which building he/she works in, etc. Not all terminals are registered to a specific individual, e.g. terminals located in meeting rooms. However, a terminal may have the same grouping scheme as the individuals. A user database may look like the outtake of an exemplary user database as shown in figure 5. The user database 306 may need to be built manually, however standard company/organization employee databases and/or phone books may of course be used as a basis for importing data. The records may include more than one facial image of the employee's face, e.g. one image showing the face in a front view and one image showing the face in a side view. Hereafter, the images of the employees faces stored in the user database is generally referred to as facial images. The user database may reside on a local storage media or on a network server/database.

According to one embodiment of the present invention, the face recognition unit 305 is configured to detect one or more faces of individuals in a video stream (video part of multimedia stream), and compare the one or more detected faces to one or more subsets of facial images of the set of facial images of known individuals in the user database according to a set of rules. The face recognition unit 305 will then assess if the comparing step results in that said detected face match one of the facial images. If this is the case, then the identity associated with said facial image will be stored as searchable meta data in said content database.

The steps of the face recognition unit is discussed in more detail below, however for simplicity, hereafter the phrase "detected face" is used when referring to the face being comparing to the facial images in said user database.

When a face match is found, the identity of the recognised individual is extracted from the user database and associatively stored as metadata in the content database together with the multimedia stream(s) and the automatically stored metadata (date and duration). The face recognition process may be applied on the stored multimedia stream as a post-conversion process, or it may be performed live during the conversion. The latter will be resource demanding, since the streaming/archiving unit needs to run both the conversion process (transcoding) and the face recognition process simultaneously. However, the order of execution of face recognition process and conversion process is not limiting to the scope of the present invention. The face recognition unit, and possible implementations of face detection and face tracking will be discussed in more detail later on.

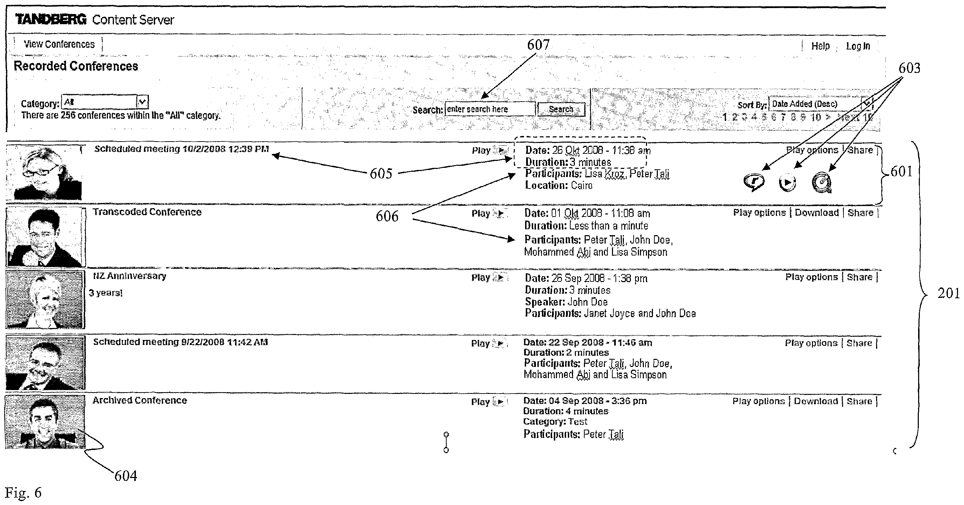

According to one embodiment of the present invention, the web server 307 provides a web based Graphical User Interface (GUI) 308 for the streaming/archiving server, as shown in figure 6. The GUI provides a list 201 of the multimedia streams (recorded conferences) currently archived (or stored) in the streaming/archiving server's content database. According to one embodiment of the present invention, the GUI list comprise of several listings or columns or fields 601 (hereafter referred to as listings), where each of said listings represent one archived conference stored in the database (which may be stored as one or more multimedia streaming file formats and/or downloadable file formats 603). According to one embodiment of the present invention, each listing 601 comprises the automatically generated meta data 605 and the identities of the participants 606 generated by the face recognition unit. The GUI may also comprise a search engine 607, allowing a user to search for meta data (including the identities of participants) associated with an archived conference. According to another embodiment of the present invention, each listing 601 further comprises images 604 of one or more of the faces of the individuals detected in the archived conference. If more than one face is detected, said thumbnail may be an animation showing all images of detected users as a sequence of images (slideshow), e.g. when a GUI user holds the mouse pointer over the image area.

Face recognition is a difficult process due to the wide variety of possible conditions the process will be expected to work in. Examples of these difficulties include: different head poses, changing and cluttered backgrounds, low quality images, and varying illumination. In addition the underlying techniques often must be able to differentiate between only subtle differences between similar faces.

Further, typical applications of face recognition such as biometrics and surveillance use face recognition to determine the identity of a face from a database that can potentially contain thousands of people. The novel implementation of face recognition in the present invention utilizes the specific domain knowledge provided by the video conferencing equipment itself. This information (referred to as protocol information) forms an integral part of the communications process and is necessary for operation. However, it can also be exploited to improve facial recognition processes thereby potentially improving their robustness and decreasing their computational cost. In addition, the application outlines the use of other common components, typically part of visual communications solutions, to provide further information useful for simplifying the face recognition process and increasing the robustness of the face recognition results.

The streaming/archiving server according to the present invention essentially exploits as much information as possible to define subsets of individuals who are probable to appear in a recorded conference. Hence, the server can start by comparing the detected face(s) in a recorded conference to a first subset of the facial images of individuals most probable to appear in the conference, given all available knowledge. If a face match is not found in the first subset, the server moves on to a second subset of facial images of individuals ranked as the next most probable to appear in the conference. The system can then stop once it is confident it has found a face match between the detected face and a facial image of an individual in the user database. On average the a priori knowledge will significantly reduce the number of comparisons required and the system will potentially converge to the true identity with only tens of comparisons rather than hundreds or thousands. This is advantageous for two reasons: first it reduces the computational load of the recognition process since fewer comparisons are required to find the true identity of a detected face. Secondly, reducing the number of comparisons increases the probability that the comparison between the recorded face and the correct face from the database yields the most confident result; this reduces the chance of a false match and consequently improves the reliability.

In an end to end video conferencing solution, numerous sources of information are available that may assist the streaming/archiving server according to the present invention in determining the most probable users to appear in a given recorded conference. According to one embodiment of the present invention, the protocol information used for establishing a communication session (or conference call) is utilized. As mentioned earlier, the streaming/archiving server acts like any other video conferencing endpoint (or terminal) in that it can make and receive calls (or communication sessions). As an endpoint, the content server uses specific (and standardized) protocols for setting up calls and communicating with the remote endpoint. These protocols can be used to determine which endpoint (or endpoints) was used for a recording. Although the exact addressing scheme used for endpoints in a given organization is specific to how the company decides to administer their network, a video conferencing endpoint always have a unique address. As mentioned earlier, video conference endpoints typically support multiple protocols such as the Session Initiation Protocol (SIP) or H.323, thus there are typically multiple unique addresses associated with each endpoint such as a SIP address, a H.323 ID and an E.164 alias. For personal endpoints, defined as an endpoint on a user's desk or in a user's office, intended to be primarily used by a given user, the addresses often incorporate the user's name, e.g. john.doe@ACME.com. In this case, the name of the user may be extracted directly from the endpoints unique address. Even if the address does not explicitly incorporate the user's name, the endpoints unique address is still unique to a given user, and the identity (or name) of the participant can be found in the user database. Therefore, knowledge of which endpoint is involved in the recording may be used to predict who is seen in the recording.

If the streaming/archiving server is in a conference call with one or more video conferencing endpoint via an MCU, the streaming/archiving server can receive from the MCU (via the H.243 standard protocol) the unique addresses of each endpoint contributing to the mixed video conference format coded data stream received from the MCU.

Furthermore, the underlying communications infrastructure provides logical groupings of endpoints. For example in a large company, endpoints may be grouped based on which office or building they are located in. Alternatively the grouping may be based on the role of the user to whom the endpoint is registered to, for example all users from the accounting department may be grouped together despite being in physically different locations. Therefore, knowledge of where the endpoint is located in the network implies knowledge about other endpoints and individual that resides in the same grouping. Often it is optimal from a network administrative point of view to have these groupings based on the geographical location of the endpoints. However, any grouping infers additional constraints on the recognition process and further reduces the complexity of the problem.

The face recognition unit according to one embodiment of the present invention makes a thumbnail image of a detected face S7. The thumbnail image is a copy of the area in a video frame of the video stream, said area representing only the face of an individual in the video frame. The face recognition unit compares one or more facial features of the thumbnail image to one or more features of one or more subsets of facial images of the known identities in the user database until a match is found. More specifically, the face recognition unit defines a number of subsets, where the subsets are ranked according to the probability that the individuals will appear in the video stream. Then the face recognition unit compares the detected face to the subsets in consecutive order, starting with the most probable subset, until a match is found.

The ranking is performed based on the protocol information and information in the user database. For example it is most probable that an individual registered (relation) as the primary user of an endpoint will appear in a multimedia stream recorded from that endpoint. Therefore that individual is defined as a subset with the highest ranking. If that individual does not match the detected face, the next most probable subset may e.g. be the individuals working in the same department (grouping) as the endpoint. If none of those individuals match the detected face, the next most probable subset may e.g. be the individuals working in the same office building, etc.

The first sub-set may only consist of one known face of the set of known faces, the second sub set may only consist of 10 of the set of known faces, the third sub-set may consist of 50 of the set of known faces, and so on until a match is found.

According to one exemplary embodiment of the present invention, the face recognition unit 305 is configured to receive protocol information from the call handling unit 302, at least comprising the unique address of the endpoint included in the conference (or communication session), and based on the protocol information and data in the user database, consecutively rank the subsets according to the following rules:
1. a first subset comprising the individuals registered/related to the unique address is ranked highest,
2. a second subset comprising all individual associated with a first group also associated with the unique address is ranked second highest, e.g. said group being department and/or office and/or geographical location,
3. a third subset comprising all individuals associated with a second group also associated with said unique address is ranked third highest, e.g. said group being company and/or organization.
4. a fourth subset comprising all individuals in the user database is ranked fourth highest.

Depending on the information (number of and type of groupings) in the user database, the number of subsets may of course vary. Some companies, organizations or video conferencing network owners may have many groups in a well organized hierarchical manner, giving possibilities of a very detailed user database grouping scheme. The streaming/archiving server may be configured by an administrator to adjust the ranking procedure of the face recognition unit according to the number of groups and their hierarchical order. For example, a group ranking scheme could be; (1) Registered individual, (2) Department, (3) Office building, (4) Geographical location, (5) company, (6) all, for a large global company.

If a specific user is not registered to the endpoint, e.g. the endpoint is a meeting room endpoint or other endpoint commonly available, the face detection unit skips right to the second subset. The face recognition unit does not have to carry on to the next subset if a match is found. If a match is not found even though the face recognition unit have compared the detected face to the complete set of images in the user database, the face recognition unit marks the face track S5 of that face as "unknown".

To further narrow the search space when assessing and attempting to determine the identity of a detected face is to incorporate learning abilities to help predict who might be seen in a conference recording from a given endpoint. Therefore, according to one embodiment of the present invention the streaming/archiving server creates a histogram for each endpoint, based on who has previously used a given endpoint. In other words, the histogram is a frequency histogram in that it stores the number of times a given identity has used a particular endpoint, e.g. John used endpoint A 5 times, Jacob used endpoint A 10 times, Julie used endpoint A 3 times etc. In a future recording when attempting to recognize the individual it could then use this existing histogram to determine who it is likely to see. E.g. compare the detected face to Jacob first, John second and Julie third. Even if endpoint A is a meeting room system it can still learn who uses endpoint A the most and therefore who is the most probable to be using it in a subsequent recording. The endpoint histogram for an endpoint therefore comprises a list of the users who has been recognized in previous recordings from a given endpoint and how many times that user has been recognized in a recording from the given endpoint. The endpoint histogram may e.g. be a top ten list of the most frequent users, or may comprise all the users recognized during a predefined time period (e.g. during the last year). The endpoint histograms may be stored on a local storage medium, e.g. in the user database, or on a network server/database. According to one exemplary embodiment, the individuals in a given endpoints histogram and said given endpoint is associated with the same group (a histogram group) in the user database (see figure 5).

Therefore, according to another embodiment of the present invention, the face recognition unit is configured to, based on the protocol information, the endpoint histogram and data in the user database, generate a user histogram group for each terminal, wherein the most frequent users of a terminal is associated with said user histogram group. The face recognition unit may then rank a subset comprising all individuals associated with a user histogram group also associated with the unique address higher than other associated groups. One exemplary embodiment includes ranking the subsets according to the following rules:
1. a first subset comprising the individuals registered/related to the unique address is ranked highest
2. a second subset comprising all individuals associated with a histogram group for said endpoint is ranked second highest,
3. a third subset comprising all individual associated with a first group also associated with the unique address is ranked third highest, e.g. said group being department and/or office and/or geographical location.
4. a fourth subset comprising all individuals associated with a second group also associated with said unique address is ranked fourth highest, e.g. said group being company and/or organization.
5. a fifth subset comprising all individuals in the user database is ranked fifth highest.

If a specific user is not registered to the endpoint, e.g. the endpoint is a meeting room endpoint or other endpoint commonly available, the face detection unit skips right to the second sub-set.

This approach may be particularly useful when there are large number of people in a given office, in which case if recognition fails on the user the endpoint is registered to, the system would normally have to make comparisons to a lot of faces between people from the same office. By exploiting knowledge on the most frequent users of an endpoint the search space can be drastically reduced, as users very often use the same endpoints (e.g. the meeting room endpoint closest to their office) within geographical limits of their location. Learning abilities will narrow the search parameters as time goes on and as the system learns more thus improving the results the more the system is used.

Furthermore, other information may be used in this learning process to further narrow the search space during face recognition. For example, if a User1 uses EndpointA every Monday at 10am, it is probable that one of the faces detected in a conference recorded from EndpointA at 10:15am on a Monday belongs to User1. Hence, the face recognition unit should compare the detected faces to the image of User1's face early in the process. Essentially the learning process could take advantage of not just who used a given endpoint, but when they used it. This provides an additional metric to incorporate into the process of narrowing the search space, thus increasing the likelihood of determining the user's identity without comparing the face to the entire database.

Another possibility is to exploit a mechanism the streaming/archiving server uses during operation. As an endpoint, the streaming/archiving server has addressing that allows it to be called from a standard video conferencing endpoint. This addressing can specify a particular output configuration that defines the format any output streams or downloadable files should take. Often these addresses (also known as a recording alias) are unique to an individual and based on their personal preferences and needs. These aliases may be used to determine who is likely to be appearing in a recorded conference. Histograms or some other similar approach could be formed based on who uses a given recording alias. When a conference is recorded, knowledge of the recording alias used may be utilized to predict who might be present in the recorded conference. This recording alias mechanism is described in more detail in U.S. patent application US 2008-0072159.

Even further, video conference equipment is often integrated with Microsoft's Office Communications Server (OCS). OCS provides presence information as well as access to calendar information. Presence and calendar information may be used to generate a subset of individuals probable to appear in a recorded conference; i.e. if we know Jim is in a meeting from 4-5pm in a certain meeting room (and we know which endpoint is in that room) there is a high probability that Jim is in the video stream related to a recording recorded at that time from that endpoint. Further, knowledge of who else is scheduled to be in the meeting together with Jim the face recognition unit may define a subset of individuals who are probable to appear in the recording.

Alternatively, video communication solutions often incorporate a video conferencing management system (VCMS) (or a management suite (MS)) to manage all the endpoints and other communications equipment in a video conferencing network. This includes functions such as endpoint scheduling and resource allocation, meaning the VCMS sometimes knows which individual has reserved a given endpoint. This is particularly true for endpoints deemed as being a common resource, such as meeting room video conferencing endpoints. The VCMS allows users to book an endpoint for a scheduled meeting, thus the VCMS could provide information to the streaming/archiving server and the face recognition unit on which user(s) currently has a given endpoint booked. This information may assist in determining probable individuals to appear in a recorded conference.

Furthermore, the VCMS allows reoccurring conferences to be set up. These conferences occur at the same time each day, week, or month, thus it is likely face recognition results may be applicable across successive reoccurring conferences providing a good starting point for the recognition system. The VCMS's ability to book meeting room type endpoints means that when dealing with an endpoint that is not registered to a specific individual, the VCMS may be able to indicate who is using the endpoint, thus face recognition is applied to the facial image of this individual first. This is complementary to the way face recognition is applied to personal systems in that recognition is applied to the facial image of the individual the endpoint is registered to first.

Some individuals have personal endpoints at work as well as at home meaning their identity is associated with multiple devices. When contacting a individual, any endpoints belonging to the user can be called. So, if the individual does not answer his office endpoint (i.e. they are at home and not at the office), an automated services such as FindMeTM take over the call handling and attempt to locate the individual by automatically calling the other endpoints associated with the individual. Thus, through the find me service the face recognition unit could determine which individual a unique address is associated with regardless of whether the person is dialed at work or at home.

The endpoint may even require authentication to be used, this would provide even greater certainty regarding who is being recorded. However, even not this knowledge can guarantee the identity of an individual as they may have been authenticated by someone else. It does, however, provide a good starting point for the face recognition unit.

The most robust solution is likely to combine all available knowledge and form a probability estimate for each face in the database based on how likely the face is to appear in the currently processed recorded conference. The faces could then be compared to images of users, starting at the most probable user and working its way down to the least probable user.

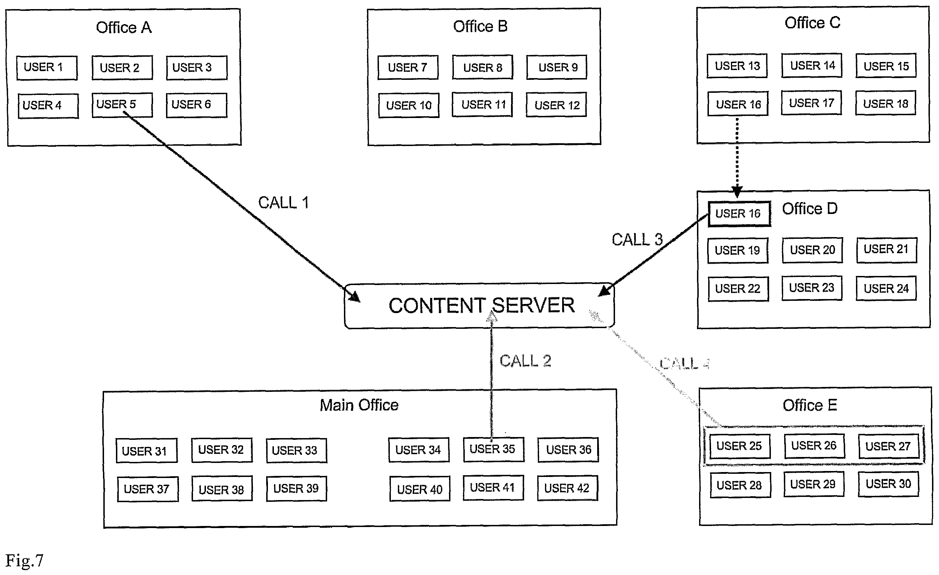

The present invention is in the following illustrated by example. Figure 7 illustrates four exemplary use cases for the present invention.

To illustrate how this information could be used the following section details a simple use case using protocol information to reduce the complexity of the problem. The example involves a hypothetical company that has six offices with a number of individuals in each office. The example illustrates many individuals each with a personal endpoint. In the examples that follow we describe a personal endpoint as being registered to a given individual in that they are the primary user but not necessarily the only one.

First, in call 1, a User 5 calls the streaming/archiving server to make a conference recording. The conference call is converted and stored on the content database as a multimedia stream. The streaming/archiving server finds the unique address of the calling endpoint from the communication session. In a user database the unique address of the endpoint is associated with a group "Office A", meaning that the endpoint is located in Office A, and is registered (related) to the identity User 5. The user database further comprise 6 identities associated with the group "Office A"; User 1-6, 6 identities associated with the group "Office B"; User 7-12, etc. All identities (User 1-42) and endpoints are associated with a group "Company", and a facial image is stored for each individual. Based on this information the streaming/archiving server knows (via the user database) that the endpoint is located in Office A and is registered to a User 5. The face recognition unit creates a thumbnail image of a detected face in the video stream and starts comparing the thumbnail image to subsets of facial images from the user database. It is most probable that User 5 is in said multimedia stream, since the endpoint is registered to User 5. The facial image of User 5 is then defined as a first subset comprising 1 facial image. It is also probable that another person in office A is using the endpoint of User 5, since they work in the same office. The 6 individuals associated with group "Office A" is defined as a second subset comprising 6 facial images, ranked second highest. Further it is probable that any of the individuals associated with the group "company" is using the endpoint of User 5 since they work in the same company. The 42 users associated with Company are defined as a third subset comprising 42 facial images, and ranked third highest. The first subset is ranked highest, so the face recognition unit compares the thumbnail image to the facial image of User 5 stored in the user database, and concludes that the face detected in the video stream matches User 5. The face recognition unit associatively stores the identity of User 5 (typically the name of User 5) and the thumbnail image of User 5 as meta data together with the corresponding multimedia stream in the content database.

In call 2, a User 35 calls the streaming/archiving server from an endpoint registered to User 41 (and associated with groups "main office" and "company") to make a conference recording. Now a first subset will be the facial image of User 41, a second subset will be the facial images of individuals associated with the group "main office", and third subset the facial images of individuals associated with the group "company", ranked accordingly. The face recognition unit first compares the thumbnail image to an facial image of User 41, since this is the highest ranked subset, and determines that they do not match. The face recognition unit then compares the facial image to the second highest ranked subset, namely facial images of all individuals associated with the "Main Office" group in the user database, and determines that the thumbnail image matches the facial image of User 35. Hence, correct identity of the participant detected in the conference recording is User 35.

In call 3, a User 16 from Office C visits Office D and makes a call to the streaming/archiving server from an endpoint registered to User 19. During face recognition the face recognition unit first compares the thumbnail image of the detected face to the most probable individual; the facial image of User 19 in the content database, and determines that they do not match. The face recognition unit then compares the thumbnail image to the next ranked subset; a facial image of all users associated with group "Office D" in the user database, and determines that there is no match. The face recognition unit is then forced to compare the thumbnail image to all facial images of users associated with the group "company" in the user database, typically all the offices except the office that was already compared (Office D in this case), and determines that the facial image matches the image of User 16.

Call 4 involves three users (User 25, 26, and 27) in one call. This may be a call through a Multipoint Control Unit (MCU) or three users sharing a single conference room endpoint. In either of these cases the content server detects three faces in the recorded video and attempts to identify each of them. The procedure for determining the identity of each of these faces is the same as for a single face. The face recognition unit first compares each face to an image of the user registered (related) to a given endpoint, it then moves on to users associated with the same office or department (or other suitable preconfigured grouping), followed by all users registered to the same organization. In call 4, all three users are from Office E, and therefore it determines their identity quickly.

Over time, the streaming/archiving system may keep track of who uses a given endpoint the most (histogram). According to one exemplary embodiment, an endpoint with the unique address "End1@comp.org" is most frequently used by User 1, User 8 and User 14. The user database may reflect this information by updating a histogram group, e.g. "HistEnd1", and associating the unique address "End1@comp.org" and the identities "User 1", "User 8" and "User 14" with group "HistEnd1". When the face recognition unit compares a detected face in a multimedia stream from the endpoint with the unique address "End1@comp.org", one of the subsets defined may be facial images of individuals associated with the group "HistEnd1", here User 1, User 8 and User 14. As use of the endpoint changes over time, and other individuals enter the most frequent user list, the user database continuously updates the histogram group to reflect this.

In order to perform face recognition on faces in the video, the faces must first be detected and preferably tracked so that an image of the detected face can be passed along to the face recognition step. These steps are independent of face recognition method according the present invention, yet their robustness can significantly improve the success of the recognition step. One exemplary embodiment of each of the steps involved in the process performed by the face recognition unit is discussed in the following sections. However, it should be noted that there are several well known ways of implementing face detection, face tracking and face recognition, and that the method below is an exemplary embodiment and not limiting to the scope of the invention.

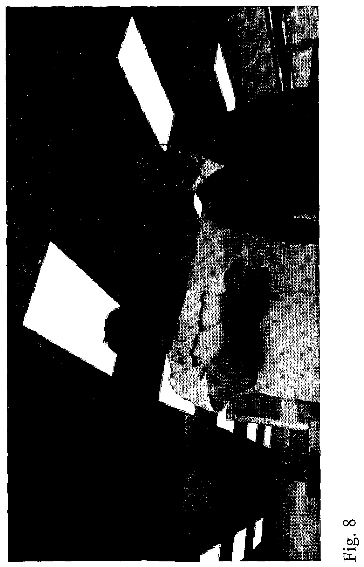

According to one embodiment of the present invention, the face recognition unit 305 is configured to receive a video stream S8, e.g. the video part of a multimedia stream (either a stored multimedia stream, or directly from the conversion engine). For each frame in the video stream, a face detection unit searches for faces in the video frame. Figure 8 shows the kind of output produced by the face detection unit, i.e. it identifies regions in the image it believes to be faces. There are a variety of known techniques to achieve this; one example uses a series (termed a cascade) of trained classifiers [Paul Viola and Michael J. Jones, "Rapid Object Detection using a Boosted Cascade of Simple Features," IEEE CVPR, 2001]. These cascades are trained on large sets of images both with and without faces (termed positive and negative samples) and essentially learn distinguishing features of a face. When applied to an image (in this case a single frame from a video stream) each classifier from the cascade is applied to regions of the image that increase in size at each iteration. If any stage of the cascade rejects the notion of a face in a given region the process stops. The cascade is constructed such that early stages use simple features that can quickly reject regions that clearly are not faces, thus making the approach computationally efficient.

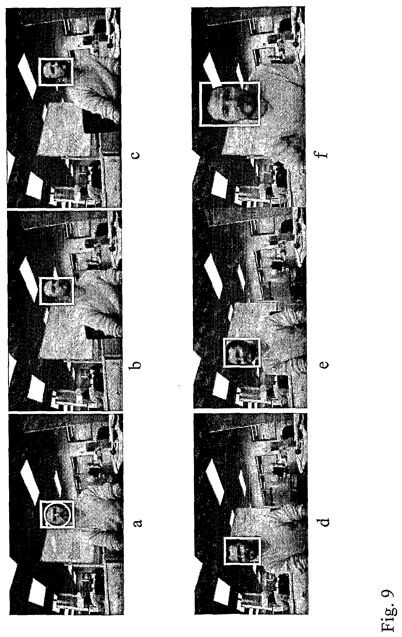

If one or more faces are detected S4 in a video frame, a face tracking unit initiates tracking S5 of the detected face(s) using the initial face location(s) as provided by the face detection unit. Tracking allows the detected face to be tracked throughout the remaining of the video stream. Thus, only one successful recognition is needed for each face that appears in the video stream. Minimising the number of recognitions that are performed is important as face recognition can be a computationally expensive operation. Figure 9 demonstrates the process of tracking. The circle in image 9a shows the result of face detection. This initializes the tracker for that face shown as the rectangle. The other images (9b-9f) depict this face tracked in subsequent frames.

Tracking algorithms are more suited to locating a given face throughout a video stream compared to naively applying face detection for every frame. This is because face detection is not as robust to pose changes as the tracking algorithm and is intermittent in its ability to redetect all faces in all frames. In addition, the face detection process has no concept of which face is which between subsequent detections thus ill suited to tracking. In contrast, tracking algorithms take the face's previous location into account and therefore search for nearby regions similar to the face region from previous frames in the video stream. Furthermore, tracking algorithms are computationally less expensive than performing face detection for each frame.

After the detected faces are being tracked, face detection is performed periodically to check for any new faces that may have appeared in the video stream. Because the locations of the currently tracked faces are known the system can determine if subsequent detections are new or simply redetections of faces that are already being tracked.

When a track of a face is established, the face recognition unit then makes a thumbnail image (a copy) of the detected and tracked face, where the facial image is only the part of the video frame limited by the tracking rectangle. This thumbnail image, which essentially contains only the face of the tracked user, can then be used for face recognition and compared (or matched) to the stored facial images of known individuals in the user database.

Having obtained a thumbnail image of the face of an individual that appears in the video stream, face recognition can now be applied to determine their identity. Face recognition can be applied to any number of faces that have been successfully detected in a given frame. The amount of processing time that can be dedicated to this process is dictated by whether this operation is being performed post-conversion or in real-time. When operating post-conversion there is more flexibility in terms of how much time the recognition process can take, thus it could apply recognition to every face in the frame (every face that is large enough to be tracked and produce thumbnail images suitable for face recognition). Given enough computational resources this process could even be performed in real-time, however, the maximum number of faces that could be recognized for a given frame will be finite due to the time constraints that exist when operating in a real-time settings. It should be noted, however, that typically not all faces being tracked need to have recognition applied in a single frame. Often a well localized and frontal facing thumbnail image will only be produced intermittently, thus it is unlikely recognition would need to be applied for all individuals in one frame, and instead recognition operations will be dispersed throughout the duration of the call. Furthermore, once a thumbnail image has been extracted for a tracked individual the recognition process can be applied in the background while tracking continues in real-time for the other individuals. Alternatively if the recognition results are not needed immediately the thumbnails could be queued up and processed at a later stage (offline). In addition, the reduction in search space according to the present invention increase the likelihood of face recognition being performed in real-time when compared to typical face recognition systems that must compare each face to an entire database of faces. It should also be noted that a tracked face need only be recognized successfully once, after that the face is simply tracked to ensure recognition is not applied to this face again.

In order to apply face recognition the face recognition unit must first be trained by providing a set of images of each individual and their identity. The process of training need only be performed once.

When performing recognition on the thumbnail images, the system starts by comparing the thumbnail images to the facial images of known individuals in the user database according to the method discussed above. Processing stops once the system is confident it has found a match. The measure of confidence in a face recognition system is typically based on how similar any two faces are computed to be.

If the identity of a face cannot be established the face's identity is classified as an unknown person. If there are unknown people, video conference owners (or user responsible for recorded conference) could manually specify the identity of the person. If this person's identity is desired for future conference recordings in which he/she may appear, additional training images of the individual could be provided thus adding this individual to the list of known individuals in the user database. If this person appears in future conference recordings, their identity will be found by the face recognition unit. Alternatively, the images of the faces previously defined as unknown from the video as training images, thus not requiring the user to enter more training images.

Another possible enhancement is to use any new additions to the user database of known individuals to compare to any unknown faces from previous conferences. Therefore, if this unknown face has appeared in previous conferences, all conferences where this individual appears will be updated thus allowing future searches to be more accurate.

Streaming/archiving server can be stand-alone device or part of other network device, such as MCU, gatekeeper etc.

## Claims

1. A server (301) configured to receive a video conference format coded data stream, comprising:
a conversion unit (303) for
converting said video conference format coded data stream to a multimedia stream in a defined multimedia streaming format, and
associatively storing said multimedia stream and searchable meta data in a content database (304),
wherein said server further comprises:
a user database (306) including identities of known individuals respectively stored with a set of associated facial images,
a face recognition unit (305) configured to:
detect a face in a video stream included in said multimedia stream,
define a plurality of subsets of facial images of the set of facial images of the known individuals in the user database (306), the plurality of subsets including facial images of one or more of said individuals, where the subsets are ranked according to the probability that the individuals will appear in the video stream,
compare the detected face to the subsets in consecutive order starting with the most probable, until a match is found, and
if said detected face matches one of the facial images, store the identity associated with
said facial image as searchable meta data (605) in said content database (304).

2. A server (301) according to claim 1, wherein
said server (301) is configured to establish a communication session with a video conferencing terminal or an MCU for receiving said video conference format coded data stream,
said user database (306) further includes one or more unique addresses of known terminals, where said identities and unique addresses are associated with a plurality of groups, and where a unique address may be related to one or more of said individuals, and
rank the subsets based on protocol information extracted from said communication session and said groups and/or said relations in said user database.

3. A server (301) according to claim 2, wherein
the protocol information comprises the unique address of one or more terminals being the origin of said video conference format coded data stream.

4. A server (301) according to one of the preceding claims, wherein
the face recognition unit (305) is further configured to create a thumbnail image of said detected face, and
associatively store said thumbnail image with the multimedia stream in said content database (304).

5. A server (301) according to one of the preceding claims, further configured to provide a graphical user interface (308), GUI, comprising a list (201) of available multimedia streams in said content database (304), each listing comprises a link to a stored multimedia stream and said searchable meta data (605) associated with a multimedia stream, including said names of recognized participants.

6. A server (301) according to claim 5, wherein
said listings (201) further comprise one or more stored thumbnail image of individuals detected in each respective multimedia stream.

7. A server (301) according to one of the preceding claims, wherein
said video conference format coded data stream is a H.323, H.320 or SIP coded data stream.

8. A server (301) according to one of the preceding claims, wherein
said face recognition unit (305) is further configured to:
based on said unique address, rank the subsets according to the following rules:
(1) a first subset comprising the individual related to the unique address,
(2) a second subset comprising all individuals associated with a first group also associated with the unique address,
(3) a third subset comprising all individuals associated with a second group also associated with the unique address.

9. A server (301) according to claim 8, wherein
said first group is chosen from the groups: department, geographical location, building, office or floor, and
said second group is chosen from the groups: company, organization, or set of known individuals.

10. A server (301) according to claim 8, wherein
said face recognition unit (305) is further configured to:
generate a user histogram group for each terminal, wherein the most frequent users of a terminal is associated with said user histogram group, and
rank a fourth subset comprising all individuals associated with a user histogram group also associated with the unique address of said terminal higher than said second subset (2).

11. A server (301) according to claim 8, wherein,
said face recognition unit (305) is further configured to
generate a list of probable users of a terminal at a given time, based on information from one or more of the following video conferencing network resources: scheduling servers (management suite), presence servers (OCS);
defining a fifth subset comprising facial images of known users in said list of probable users and rank the fifth subset higher than said second subset (2).

12. A method for identifying individuals in a multimedia stream originating from a video conferencing terminal or MCU, comprising:
executing (S4) a face detection process on said multimedia stream, the multimedia stream being converted in a defined multimedia streaming format from a video conference format coded data stream and being associatively stored with searchable meta data in a content database (304) including identities of known individuals respectively stored with a set of associated facial images;
defining a plurality of subsets of facial images of the set of facial images of the known individuals in the user database (306), the plurality of subsets including facial images of one or more of said individuals, where the subsets are ranked according to the probability that the individuals will appear in the video stream,
consecutively comparing a detected face to the subsets in consecutive order starting with the most probable, until a match is found, and
if said detected face matches one of the facial images, storing the identity associated with said facial image as searchable meta data (605) in said content database (304).

13. A method according to claim 12, comprising
establishing a communication session with said video conferencing terminal or MCU for receiving a video conference format coded data stream,
said user database (306) further includes one or more unique addresses of known terminals, where said identities and unique addresses are associated with one or more groups,
and where a unique address may be related to one or more of said individuals, and extracting protocol information from said communication session, and
ranking the subsets based on the protocol information and said groups and/or said relations in said user database.

14. A method according to claim 13, wherein
the protocol information comprises the unique address of one or more terminals being the origin of said video conference format coded data stream.

15. A method according to one of the preceding claims, comprising
creating (S7) a thumbnail image of said detected face, and
associatively store said thumbnail image with the multimedia stream in said content database.

16. A method according to one of the preceding claims, comprising
providing a graphical user interface (308), GUI, comprising a list (201) of available multimedia streams in said content database (304), each listing comprises a link to a stored multimedia stream and said searchable meta data (605) associated with a multimedia stream, including said names of recognized participants.

17. A method according to claim 16, wherein
said listings further comprise one or more stored thumbnail images of individuals detected in each respective multimedia stream.

18. A method according to one of the preceding claims, wherein
said video conference format coded data stream is a H.323, H.320 or SIP coded data stream.

19. A method according to one of the preceding claims, comprising
ranking the subsets according to the following rules:
(1) a first subset comprising the individuals related to the unique address,
(2) a second sub-set comprising all individuals associated with a first group also associated with the unique address,
(3) a third sub-set comprising all individuals associated with a second group also associated with the unique address.

20. A method according to claim 19, wherein
said first group is chosen from the groups: department, geographical location, building, office or floor, and
said second group is chosen from the groups: company, organization, or set of known individuals.

21. A method according to claim 19, comprising
generating (S6) a user histogram group for each terminal, wherein the most frequent users of a terminal is associated with said user histogram group, and
ranking a fourth subset comprising all individuals associated with a user histogram group also associated with the unique address of said terminal higher than said second subset (2).

22. A method according to claim 19, comprising
generate a list of probable users of a terminal at a given time, based on information from one or more of the following video conferencing network resources: scheduling servers (management suite), presence servers (OCS);
defining a fifth subset comprising facial images of known users in said list of probable users and rank the fifth subset higher than said second subset (2).

## Patentansprüche

1. Server (301), der zum Empfangen eines im Videokonferenzformat kodierten Datenstroms konfiguriert ist und aufweist:
eine Umsetzungseinheit (303) zum
Umsetzen des genannten im Videokonferenzformat kodierten Datenstroms in einen Multimedia-Strom in einem definierten Multimedia-Streaming-Format, und
assoziativen Speichern des genannten Multimedia-Stroms und durchsuchbarer Metadaten in einer Inhaltsdatenbank (304),
wobei der genannte Server ferner aufweist:
eine Benutzerdatenbank (306), die Identitäten bekannter Personen enthält, die jeweils mit einem Satz zugeordneter Gesichtsbilder gespeichert sind,
eine Gesichtserkennungseinheit (305), die konfiguriert ist zum:
Erkennen eines Gesichts in einem Videostrom, der in dem genannten Multimedia-Strom enthalten ist,
Definieren einer Vielzahl von Teilsätzen der Gesichtsbilder des Satzes von Gesichtsbildern der bekannten Personen in der Benutzerdatenbank (306), wobei die Vielzahl von Teilsätzen Gesichtsbilder von einer oder mehr der genannten Personen enthält, wobei die Teilsätze nach der Wahrscheinlichkeit, dass die Personen in dem Videostrom erscheinen werden, eingestuft werden,
Vergleichen des erkannten Gesichts mit den Teilsätzen in aufeinanderfolgender Reihenfolge, angefangen mit dem wahrscheinlichsten, bis eine Übereinstimmung gefunden wird, und,
wenn das genannte erkannte Gesicht mit einem der Gesichtsbilder übereinstimmt, Speichern der dem genannten Gesichtsbild zugeordneten Identität als durchsuchbare Metadaten (605) in der genannten Inhaltsdatenbank (304).

2. Server (301) nach Anspruch 1, wobei
der genannte Server (301) zum Einrichten einer Kommunikationssitzung mit einem Videokonferenz-Endgerät oder einer MCU zum Empfangen des genannten im Videokonferenzformat kodierten Datenstroms konfiguriert ist,
die genannte Benutzerdatenbank (306) ferner eine oder mehr eindeutige Adressen bekannter Endgeräte enthält, wobei die genannten Identitäten und eindeutigen Adressen einer Vielzahl von Gruppen zugeordnet sind und wobei eine eindeutige Adresse auf eine oder mehr der genannten Personen bezogen werden kann, und
Einstufen der Teilsätze auf Basis von Protokollinformationen, die aus der genannten Kommunikationssitzung extrahiert werden, und der genannten Gruppen und/oder der genannten Beziehungen in der genannten Benutzerdatenbank.

3. Server (301) nach Anspruch 2, wobei
die Protokollinformationen die eindeutige Adresse von einem oder mehr Endgeräten aufweisen, die der Ursprung des genannten im Videokonferenzformat kodierten Datenstroms ist.

4. Server (301) nach einem der vorhergehenden Ansprüche, wobei
die Gesichtserkennungseinheit (305) ferner zum Erstellen eines Vorschaubilds des genannten erkannten Gesichts, und
zum assoziativen Speichern des genannten Vorschaubilds mit dem Multimedia-Strom in der genannten Inhaltsdatenbank (304) konfiguriert ist.

5. Server (301) nach einem der vorhergehenden Ansprüche, der ferner zum Bereitstellen einer grafischen Benutzeroberfläche (308) (GUI) konfiguriert ist, die eine Liste (201) verfügbarer Multimedia-Ströme in der genannten Inhaltsdatenbank (304) aufweist, wobei jeder Listeneintrag eine Verknüpfung mit einem gespeicherten Multimedia-Strom und den genannten einem Multimedia-Strom zugeordneten durchsuchbaren Metadaten (605) aufweist, einschließlich der genannten Namen erkannter Teilnehmer.

6. Server (301) nach Anspruch 5, wobei
die genannten Listeneinträge (201) ferner ein oder mehr gespeicherte Vorschaubilder von in jedem jeweiligen Multidaten-Strom erkannten Personen aufweisen.

7. Server (301) nach einem der vorhergehenden Ansprüche, wobei
der genannte im Videokonferenzformat kodierte Datenstrom ein H.323-, H.320- oder SIP-kodierter Datenstrom ist.

8. Server (301) nach einem der vorhergehenden Ansprüche, wobei
die genannte Gesichtserkennungseinheit (305) ferner konfiguriert ist zum:
Einstufen der Teilsätze auf Basis der genannten eindeutigen Adresse gemäß den folgenden Regeln:
(1) ein erster Teilsatz, der die Person mit Bezug auf die eindeutige Adresse aufweist,
(2) ein zweiter Teilsatz, der alle einer ersten Gruppe zugeordneten Personen, die auch der eindeutigen Adresse zugeordnet sind, aufweist,
(3) ein dritter Teilsatz, der alle einer zweiten Gruppe zugeordneten Personen, die auch der eindeutigen Adresse zugeordnet ist, aufweist.

9. Server (301) nach Anspruch 8, wobei
die genannte erste Gruppe aus den folgenden Gruppen ausgewählt ist: Abteilung, geografischer Ort, Gebäude, Büro oder Stockwerk, und
die genannte zweite Gruppe aus den folgenden Gruppen ausgewählt ist: Unternehmen, Organisation oder Satz bekannter Personen.

10. Server (301) nach Anspruch 8, wobei
die genannte Gesichtserkennungseinheit (305) ferner konfiguriert ist zum:
Erzeugen einer Benutzerhistogrammgruppe für jedes Endgerät, wobei die häufigsten Benutzer eines Endgeräts der genannten Benutzerhistogrammgruppe zugeordnet werden, und
höheres Einstufen eines vierten Teilsatzes, der alle Personen aufweist, die einer Benutzerhistogrammgruppe zugeordnet sind, die auch der eindeutigen Adresse des genannten Endgeräts zugeordnet ist, als den genannten zweiten Teilsatz (2).

11. Server (301) nach Anspruch 8, wobei
die genannte Gesichtserkennungseinheit (305) ferner konfiguriert ist zum
Erzeugen einer Liste wahrscheinlicher Benutzer eines Endgeräts zu einem gegebenen Zeitpunkt auf Basis von Informationen von einer oder mehr der folgenden Videokonferenznetzwerkressourcen: Scheduling-Server (Managementsuite), Anwesenheitsserver (OCS);
Definieren eines fünften Teilsatzes, der Gesichtsbilder bekannter Benutzer in der genannten Liste wahrscheinlicher Benutzer aufweist und höheres Einstufen des fünften Teilsatzes als den genannten zweiten Teilsatz (2).

12. Verfahren zum Identifizieren von Personen in einem aus einem Videokonferenzendgerät oder einer MCU stammenden Multimedia-Strom, das aufweist:
Ausführen (S4) eines Gesichtserkennungsprozesses an dem genannten Multimedia-Strom, wobei der Multimedia-Strom von einem im Videokonferenzformat kodierten Datenstrom in ein definiertes Multimedia-Streaming-Format umgesetzt wird und mit durchsuchbaren Metadaten assoziativ in einer Inhaltsdatenbank (304) gespeichert wird, die Identitäten bekannter Personen enthält, die jeweils mit einem Satz zugeordneter Gesichtsbilder gespeichert sind;
Definieren einer Vielzahl von Teilsätzen von Gesichtsbildern des Satzes von Gesichtsbildern der bekannten Personen in der Benutzerdatenbank (306), wobei die Vielzahl von Teilsätzen Gesichtsbilder von einer oder mehr der genannten Personen enthält, wobei die Teilsätze nach der Wahrscheinlichkeit, dass die Personen in dem Videostrom erscheinen werden, eingestuft werden,
aufeinanderfolgendes Vergleichen eines erkannten Gesichts mit den Teilsätzen in aufeinanderfolgender Reihenfolge, angefangen mit dem wahrscheinlichsten, bis eine Übereinstimmung gefunden wird, und,
wenn das genannte erkannte Gesicht mit einem der Gesichtsbilder übereinstimmt, Speichern der dem genannten Gesichtsbild zugeordneten Identität als durchsuchbare Metadaten (605) in der genannten Inhaltsdatenbank (304).

13. Verfahren nach Anspruch 12, das aufweist:
Einrichten einer Kommunikationssitzung mit dem/der genannten Videokonferenz-Endgerät oder MCU zum Empfangen eines im Videokonferenzformat kodierten Datenstroms,
wobei die genannte Benutzerdatenbank (306) ferner eine oder mehr eindeutige Adressen bekannter Endgeräte enthält, wobei die genannten Identitäten und eindeutigen Adressen einer oder mehr Gruppen zugeordnet sind und wobei eine eindeutige Adresse auf eine oder mehr der genannten Personen bezogen werden kann, und
Extrahieren von Protokollinformationen aus der genannten Kommunikationssitzung, und
Einstufen der Teilsätze auf Basis der Protokollinformationen und der genannten Gruppen und/oder der genannten Beziehungen in der genannten Benutzerdatenbank.

14. Verfahren nach Anspruch 13, wobei
die Protokollinformationen die eindeutige Adresse des/der einen oder mehr Endgeräte aufweisen, die der Ursprung des genannten im Videokonferenzformat kodierten Datenstroms ist.

15. Verfahren nach einem der vorhergehenden Ansprüche, das aufweist:
Erstellen (S7) eines Vorschaubilds des genannten erkannten Gesichts, und
assoziatives Speichern des genannten Vorschaubilds mit dem Multimedia-Strom in der genannten Inhaltsdatenbank.

16. Verfahren nach einem der vorhergehenden Ansprüche, das aufweist:
Bereitstellen einer grafischen Benutzeroberfläche (308) (GUI) konfiguriert ist, die eine Liste (201) verfügbarer Multimedia-Ströme in der genannten Inhaltsdatenbank (304) aufweist, wobei jeder Listeneintrag eine Verknüpfung mit einem gespeicherten Multimedia-Strom und den genannten einem Multimedia-Strom zugeordneten durchsuchbaren Metadaten (605) aufweist, einschließlich der genannten Namen erkannter Teilnehmer.

17. Verfahren nach Anspruch 16, wobei
die genannten Listeneinträge (201) ferner ein oder mehr gespeicherte Vorschaubilder von in jedem jeweiligen Multidaten-Strom erkannten Personen aufweisen.

18. Verfahren nach einem der vorhergehenden Ansprüche, wobei
der genannte im Videokonferenzformat kodierte Datenstrom ein H.323-, H.320- oder SIP-kodierter Datenstrom ist.

19. Verfahren nach einem der vorhergehenden Ansprüche, das aufweist:
Einstufen der Teilsätze gemäß den folgenden Regeln:
(1) ein erster Teilsatz, der die Personen mit Bezug auf die eindeutige Adresse aufweist,
(2) ein zweiter Teilsatz, der alle einer ersten Gruppe zugeordneten Personen, die auch der eindeutigen Adresse zugeordnet sind, aufweist,
(3) ein dritter Teilsatz, der alle einer zweiten Gruppe zugeordneten Personen, die auch der eindeutigen Adresse zugeordnet ist, aufweist.

20. Verfahren nach Anspruch 19, wobei
die genannte erste Gruppe aus den folgenden Gruppen ausgewählt ist: Abteilung, geografischer Ort, Gebäude, Büro oder Stockwerk, und
die genannte zweite Gruppe aus den folgenden Gruppen ausgewählt ist: Unternehmen, Organisation oder Satz bekannter Personen.

21. Verfahren nach Anspruch 19, das aufweist:
Erzeugen (S6) einer Benutzerhistogrammgruppe für jedes Endgerät, wobei die häufigsten Benutzer eines Endgeräts der genannten Benutzerhistogrammgruppe zugeordnet werden, und
höheres Einstufen eines vierten Teilsatzes, der alle Personen aufweist, die einer Benutzerhistogrammgruppe zugeordnet sind, die auch der eindeutigen Adresse des genannten Endgeräts zugeordnet ist, als den genannten zweiten Teilsatz (2).

22. Verfahren nach Anspruch 19, das aufweist:
Erzeugen einer Liste wahrscheinlicher Benutzer eines Endgeräts zu einem gegebenen Zeitpunkt auf Basis von Informationen von einer oder mehr der folgenden Videokonferenznetzwerkressourcen: Scheduling-Server (Managementsuite), Anwesenheitsserver (OCS);
Definieren eines fünften Teilsatzes, der Gesichtsbilder bekannter Benutzer in der genannten Liste wahrscheinlicher Benutzer aufweist und höheres Einstufen des fünften Teilsatzes als den genannten zweiten Teilsatz (2).

## Revendications

1. Serveur (301) conçu pour recevoir un flux de données codé en format de vidéoconférence, comprenant :
une unité de conversion (303) destinée à
convertir ledit flux de données codé en format de vidéoconférence en un flux multimédia dans un format de diffusion multimédia défini, et
stocker de manière associative ledit flux multimédia et des métadonnées consultables dans une base de données de contenu (304),
ledit serveur comprenant en outre :
une base de données d'utilisateur (306) comprenant des identités de personnes connues stockées respectivement avec un ensemble d'images faciales associées,
une unité de reconnaissance de visage (305), conçue pour :
détecter un visage dans un flux vidéo inclus dans ledit flux multimédia,
définir une pluralité de sous-ensembles d'images faciales de l'ensemble d'images faciales des personnes connues dans la base de données d'utilisateur (306), la pluralité de sous-ensembles comprenant des images faciales d'une ou plusieurs desdites personnes, les sous-ensembles étant classés selon la probabilité d'apparition des personnes dans le flux vidéo,
comparer le visage détecté aux sous-ensembles en ordre successif en commençant par le plus probable, jusqu'à ce qu'une coïncidence soit trouvée, et
si ledit visage détecté coïncide avec une des images faciales, stocker l'identité associée à ladite image faciale en guise de métadonnée consultable (605) dans ladite base de données de contenu (304).

2. Serveur (301) selon la revendication 1, dans lequel :
ledit serveur (301) est conçu pour établir une session de communication avec un terminal de vidéoconférence ou une MCU afin de recevoir ledit flux de données codé en format de vidéoconférence,
ladite base de données d'utilisateur (306) comprend en outre une ou plusieurs adresses uniques de terminaux connus, lesdites identités et adresses uniques étant associées à une pluralité de groupes, et une adresse unique pouvant être liée à une ou plusieurs desdites personnes, et
classer les sous-ensembles sur la base d'une information de protocole extraite de ladite session de communication et desdits groupes et/ou desdites relations dans ladite base de données d'utilisateur.

3. Serveur (301) selon la revendication 2, dans lequel :
l'information de protocole comprend l'adresse unique d'un ou plusieurs terminaux à l'origine dudit flux de données codé en format de vidéoconférence.

4. Serveur (301) selon l'une quelconque des revendications précédentes, dans lequel :
l'unité de reconnaissance de visage (305) est en outre conçue pour créer une image miniature dudit visage détecté, et
stocker de manière associative ladite image miniature avec le flux multimédia dans ladite base de données de contenu (304).

5. Serveur (301) selon l'une quelconque des revendications précédentes, conçu en outre pour fournir une interface utilisateur graphique (GUI) (308), comprenant une liste (201) de flux multimédias disponibles dans ladite base de données de contenu (304), chaque liste comprenant un lien vers un flux multimédia stocké et ladite métadonnée consultable (605) associée à un flux multimédia, y compris lesdits noms des participants reconnus.

6. Serveur (301) selon la revendication 5, dans lequel :
lesdites listes (201) comprennent en outre une ou plusieurs images miniatures stockées de personnes détectées dans chaque flux multimédia respectif.

7. Serveur (301) selon l'une quelconque des revendications précédentes, dans lequel :
ledit flux de données codé en format de vidéoconférence est un flux de données codé en H.323, H.320 ou SIP.

8. Serveur (301) selon l'une quelconque des revendications précédentes, dans lequel :
ladite unité de reconnaissance de visage (305) est en outre conçue pour :
sur la base de ladite adresse unique, classer les sous-ensembles selon les règles suivantes :
(1) un premier sous-ensemble comprenant la personne liée à l'adresse unique,
(2) un deuxième sous-ensemble comprenant toutes les personnes associées à un premier groupe également associé à l'adresse unique,
(3) un troisième sous-ensemble comprenant toutes les personnes associées à un second groupe également associé à l'adresse unique.

9. Serveur (301) selon la revendication 8, dans lequel :
ledit premier groupe est choisi parmi les groupes : service, localisation géographique, bâtiment, bureau ou étage, et
ledit second groupe est choisi parmi les groupes : entreprise, organisation ou ensemble de personnes connues.

10. Serveur (301) selon la revendication 8, dans lequel :
ladite unité de reconnaissance de visage (305) est en outre conçue pour :
générer un groupe d'histogrammes d'utilisateur pour chaque terminal, les utilisateurs les plus fréquents d'un terminal étant associés audit groupe d'histogrammes d'utilisateur, et
classer plus haut que ledit deuxième sous-ensemble (2) un quatrième sous-ensemble comprenant toutes les personnes associées à un groupe d'histogrammes d'utilisateur également associé à l'adresse unique dudit terminal.

11. Serveur (301) selon la revendication 8, dans lequel :
ladite unité de reconnaissance de visage (305) est en outre conçue pour :
générer une liste d'utilisateurs probables d'un terminal à un moment donné, sur la base d'une information en provenance d'une ou plusieurs des ressources réseau de vidéoconférence suivantes : serveurs de planification (suite de gestion), serveurs de présence (OCS) ;
définir dans ladite liste d'utilisateurs probables un cinquième sous-ensemble comprenant des images faciales d'utilisateurs connus, et classer le cinquième sous-ensemble plus haut que ledit deuxième sous-ensemble (2).

12. Procédé d'identification de personnes dans un flux multimédia dont un terminal de vidéoconférence ou une MCU est à l'origine, le procédé consistant à :
exécuter (S4) un processus de détection de visage sur ledit flux multimédia, le flux multimédia étant converti dans un format de diffusion multimédia défini à partir d'un flux de données codé en format de vidéoconférence, et étant stocké de manière associative avec des métadonnées consultables dans une base de données de contenu (304) comprenant des identités de personnes connues stockées respectivement avec un ensemble d'images faciales associées ;
définir une pluralité de sous-ensembles d'images faciales de l'ensemble d'images faciales des personnes connues dans la base de données d'utilisateur (306), la pluralité de sous-ensembles comprenant des images faciales d'une ou plusieurs desdites personnes, les sous-ensembles étant classés selon la probabilité d'apparition des personnes dans le flux vidéo,
comparer successivement un visage détecté aux sous-ensembles en ordre successif en commençant par le plus probable, jusqu'à ce qu'une coïncidence soit trouvée, et
si ledit visage détecté coïncide avec une des images faciales, stocker l'identité associée à ladite image faciale en guise de métadonnée consultable (605) dans ladite base de données de contenu (304).

13. Procédé selon la revendication 12, consistant à :
établir une session de communication avec ledit terminal de vidéoconférence ou ladite MCU afin de recevoir un flux de données codé en format de vidéoconférence,
ladite base de données d'utilisateur (306) comprend en outre une ou plusieurs adresses uniques de terminaux connus, lesdites identités et adresses uniques étant associées à un ou plusieurs groupes,
et une adresse unique pouvant être liée à une ou plusieurs desdites personnes, et
extraire une information de protocole de ladite session de communication, et
classer les sous-ensembles sur la base de l'information de protocole et desdits groupes et/ou desdites relations dans ladite base de données d'utilisateur.

14. Procédé selon la revendication 13, dans lequel :
l'information de protocole comprend l'adresse unique d'un ou plusieurs terminaux à l'origine dudit flux de données codé en format de vidéoconférence.

15. Procédé selon l'une quelconque des revendications précédentes, consistant à :
créer (S7) une image miniature dudit visage détecté, et
stocker de manière associative ladite image miniature avec le flux multimédia dans ladite base de données de contenu.

16. Procédé selon l'une quelconque des revendications précédentes, consistant à :
fournir une interface utilisateur graphique (GUI) (308), comprenant une liste (201) de flux multimédias disponibles dans ladite base de données de contenu (304), chaque liste comprenant un lien vers un flux multimédia stocké et ladite métadonnée consultable (605) associée à un flux multimédia, y compris lesdits noms des participants reconnus.

17. Procédé selon la revendication 16, dans lequel :
lesdites listes comprennent en outre une ou plusieurs images miniatures stockées de personnes détectées dans chaque flux multimédia respectif.

18. Procédé selon l'une quelconque des revendications précédentes, dans lequel :
ledit flux de données codé en format de vidéoconférence est un flux de données codé en H.323, H.320 ou SIP.

19. Procédé selon l'une quelconque des revendications précédentes, consistant à :
classer les sous-ensembles selon les règles suivantes :
(1) un premier sous-ensemble comprenant les personnes liées à l'adresse unique,
(2) un deuxième sous-ensemble comprenant toutes les personnes associées à un premier groupe également associé à l'adresse unique,
(3) un troisième sous-ensemble comprenant toutes les personnes associées à un second groupe également associé à l'adresse unique.

20. Procédé selon la revendication 19, dans lequel :
ledit premier groupe est choisi parmi les groupes : service, localisation géographique, bâtiment, bureau ou étage, et
ledit second groupe est choisi parmi les groupes : entreprise, organisation ou ensemble de personnes connues.

21. Procédé selon la revendication 19, consistant à :
générer (S6) un groupe d'histogrammes d'utilisateur pour chaque terminal, les utilisateurs les plus fréquents d'un terminal étant associés audit groupe d'histogrammes d'utilisateur, et
classer plus haut que ledit deuxième sous-ensemble (2) un quatrième sous-ensemble comprenant toutes les personnes associées à un groupe d'histogrammes d'utilisateur également associé à l'adresse unique dudit terminal.

22. Procédé selon la revendication 19, consistant à :
générer une liste d'utilisateurs probables d'un terminal à un moment donné, sur la base d'une information en provenance d'une ou plusieurs des ressources réseau de vidéoconférence suivantes : serveurs de planification (suite de gestion), serveurs de présence (OCS) ;
définir dans ladite liste d'utilisateurs probables un cinquième sous-ensemble comprenant des images faciales d'utilisateurs connus, et classer le cinquième sous-ensemble plus haut que ledit deuxième sous-ensemble (2).
